# EUROPÄISCHE PATENTSCHRIFT

(11) **EP 2 326 752 B1**
(45) Veröffentlichungstag und Bekanntmachung des Hinweises auf die Patenterteilung: **17.10.2012**
(21) Anmeldenummer: 09776102.7
(22) Anmeldetag: 19.08.2009
(51) Int. Cl.: C25D 5/02, C25D 7/10, C25D 17/00, C25D 17/12, F16J 9/26

(54) **BESCHICHTUNGSMASKE ZUM ELEKTROLYTISCHEN BESCHICHTEN EINES UMLAUFENDEN BEREICHES AUF DER MANTELFLÄCHE EINES ZYLINDERFÖRMIGEN KÖRPERS**
COATING MASK FOR ELECTROLYTICALLY COATING A PERIPHERAL REGION ON AN OUTER SURFACE OF A CYLINDRICAL BODY
MASQUE DE REVÊTEMENT POUR LE REVÊTEMENT ÉLECTROLYTIQUE D'UNE ZONE PÉRIPHÉRIQUE SUR LA SURFACE D'ENVELOPPE D'UN CORPS CYLINDRIQUE

(30) Priorität: 19.08.2008 DE 102008038323
(43) Veröffentlichungstag der Anmeldung: 01.06.2011
(73) Patentinhaber: MAHLE International GmbH, 70376 Stuttgart (DE)
(72) Erfinder: BERGMANN, Rudolf, 63755 Alzenau (DE); ROTSCH, Christopher, E-08870 Sitges Barcelona (ES); GESSLER, Franz, E-08810 Sant Pere de Ribes Barcelona (ES)
(74) Vertreter: Pohle, Reinhard
(86) Internationale Anmeldenummer: PCT/DE2009/001167
(87) Internationale Veröffentlichungsnummer: WO 2010/020235

(56) Entgegenhaltungen:
- WO-A2-2007/124728
- GB-A- 2 027 054
- JP-A- 1 073 080
- US-A1- 2002 100 695

## Beschreibung

Die Erfindung betrifft eine Beschichtungsmaske zum elektrolytischen Beschichten eines umlaufenden Bereiches auf der Mantelfläche eines zylinderförmigen Körpers nach dem Oberbegriff des Anspruches 1 und die Verwendung der Beschichtungsmaske zur Beschichtung einer Kolbenringnut eines Kolbens für einen Verbrennungsmotor nach Anspruch 7.

Aus der Patentschrift US 6 821 408 ist eine Vorrichtung zur anodischen Oxydation eines umlaufenden Bereiches auf der Mantelfläche eines zylindrischen Körpers, insbesondere der Kolbenringnut eines Kolbens für einen Verbrennungsmotor bekannt, wobei der zu beschichtende Bereich beidseitig von zwei umlaufenden und zunächst im Schnitt runden Dichtringen dadurch hermetisch abgedichtet wird, dass auf die Dichtringe von je einer Hülse Druck ausgeübt wird, bis sich die Dichtringe oval verformen, wobei diese Ovalität senkrecht zur Mantelfläche des Kolbens ausgerichtet ist. Hierdurch gelangen die Dichtringe zur Anlage an die Mantelfläche beidseitig der Kolbenringnut und verschließen diesen Bereich hermetisch. Anschließend wird ein Elektrolyt in diesen Bereich eingeleitet und die darin befindliche Kolbenringnut anodisch oxidiert. Nachteilig ist, dass ein sehr komplizierter Mechanismus zur Verformung der Dichtringe erforderlich ist. Hierbei werden die Hülsen von mehreren senkrecht zur Kolbenachse beweglichen Druckstangen über eine schräge Kontaktfläche in Bewegung parallel zur Kolbenachse versetzt.

Diesen Nachteil des Standes der Technik zu vermeiden ist Aufgabe der Erfindung. Gelöst wird diese Aufgabe mit den im Kennzeichen des Hauptanspruches stehenden Merkmalen. Zweckmäßige Ausgestaltungen der Erfindung sind Gegenstand der Unteransprüche.

Da die Beschichtungsmaske gemäß der Erfindung aus einem elastisch nachgiebigen Material besteht, muss diese unter Verwendung eines einfachen Mechanismus nur nach radial außen gedehnt werden, um Platz für einen Kolben zu machen, dessen Kolbenringnut beschichtet werden soll.

Die Erfindung wird im Folgenden anhand der Zeichnungen beschrieben. Es zeigen
- Fig. 1: eine Draufsicht auf eine Beschichtungsmaske für Kolbenringnuten, in die eine Ringleitung für einen Elektrolyten gestrichelt eingezeichnet ist,
- Fig. 2: einen Schnitt durch die Beschichtungsmaske entlang der Linie AA in Fig. 1,
- Fig. 3: einen vergrößerten Ausschnitt des in Fig. 2 dargestellten Schnittbildes,
- Fig. 4: eine perspektivische Darstellung einer Dehnvorrichtung, mit deren Hilfe die Beschichtungsmaske nach radial außer gedehnt wird, um einen Kolben einführen zu können,
- Fig. 5: einen Schnitt durch die Beschichtungsmaske mit eingeführtem Kolben, dessen erste Kolbenringnut beschichtet wird,
- Fig. 6: eine Ringleitungsschablone zur Herstellung der Ringleitung und
- Fig. 7: eine Gießform mit eingelegter Ringleitungsschablone zur gießtechnischen Herstellung der Beschichtungsmaske.

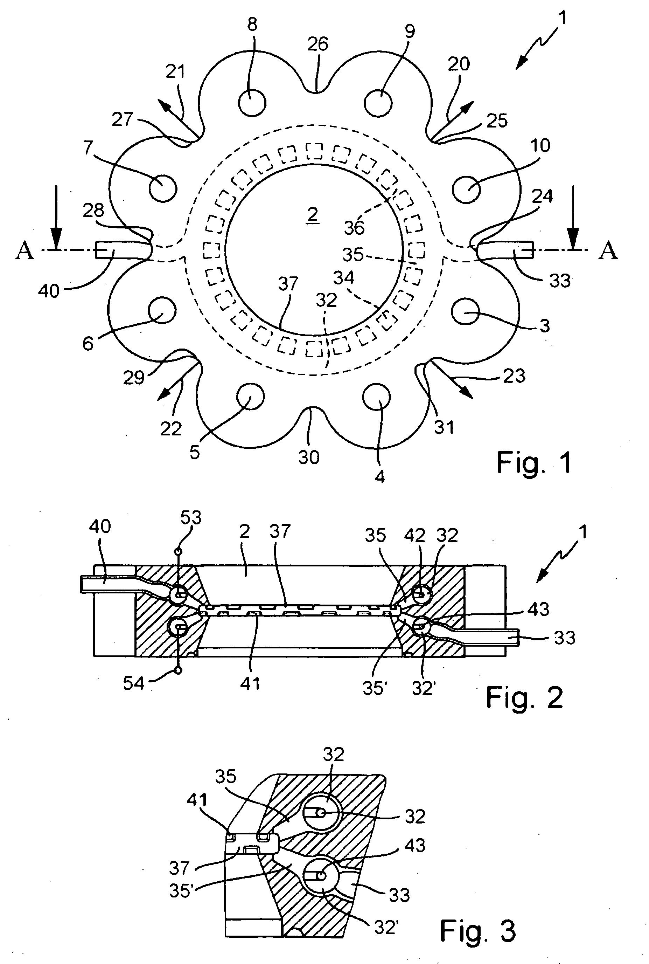

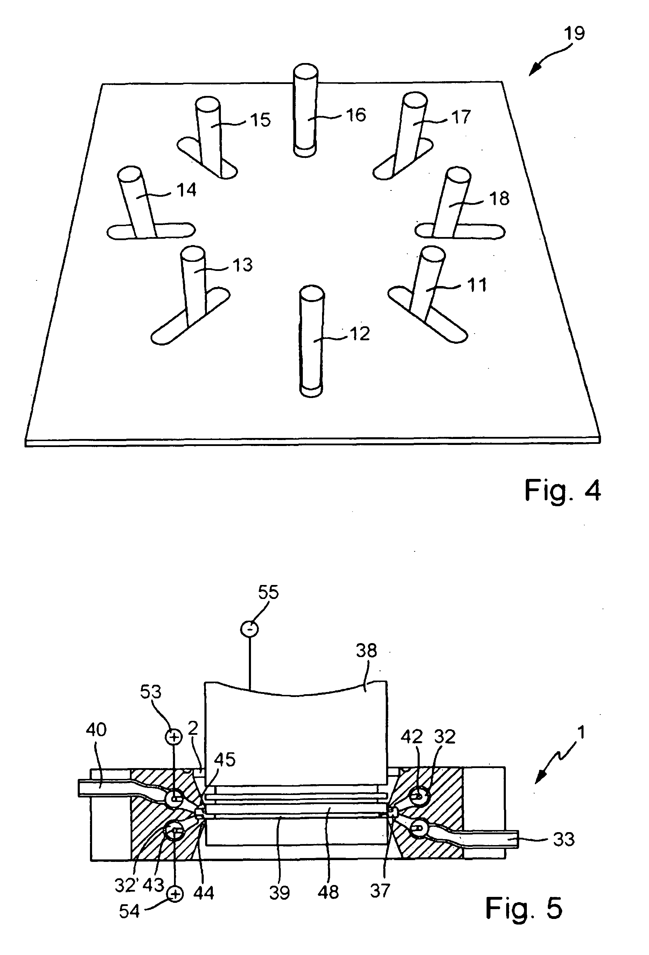

Fig. 1 zeigt eine Beschichtungsmaske 1 in Draufsicht mit einer inneren Öffnung 2 zur Aufnahme eines zylinderförmigen Körpers, beispielsweise eines Kolbens 38 (Fig. 5), von dem ein umlaufender Bereich, beispielsweise eine Kolbenringnut 39 (Fig. 5), beschichtet werden soll. Die Beschichtungsmaske 1 besteht aus Kautschuk, vorzugsweise aus Silikon, und weist regelmäßig über ihren Umfang verteilt acht axial liegende Öffnungen 3 bis 10 auf, deren Zweck, wie weiter unten näher erläutert wird, darin besteht, Dome 11 bis 18 einer Dehnvorrichtung 19 (Fig. 4) aufzunehmen, mit deren Hilfe die Beschichtungsmaske 1 in Richtung der Pfeile 20 bis 23 gedehnt werden kann, sodass hierdurch auch die innere Öffnung 2 vergrößert wird, wonach in die innere Öffnung 2 ein Kolben eingeführt werden kann.

Zwischen den Öffnungen 3 bis 10 weist die Beschichtungsmaske 1 Bereiche 24 bis 31 mit dünnerer Wandung auf, die die Elastizität der Beschichtungsmaske 1 erhöhen, sodass die Beschichtungsmaske 1 leichter in Richtung der Pfeile 20 bis 23 gedehnt werden kann.

Gestrichelt eingezeichnet ist in Fig. 1 eine Ringleitung 32, der über einen Zulaufkanal 33 ein Elektrolyt zu geführt werden kann. Über Zuführungskanäle 34, 35, 36 ... gelangt der Elektrolyt dann in eine umlaufende Beschichtungsnut 37, die, wie Fig. 5 zeigt, von der Kolbenringnut 39 eines Kolbens 38, die beschichtet werden soll, verschlossen wird. Anschließend wird der Elektrolyt über einen Ablaufkanal 40 aus der Beschichtungsmaske 1 abgeleitet.

Die Figuren 2 und 3 sind Schnitte entlang der Linie AA in Fig. 1 und zeigen, dass die Beschichtungsmaske 1 zwei in axialer Richtung hintereinander angeordnete Ringleitungen 32 und 32' aufweist, die jeweils über gleichmäßig über den Umfang verteilte Zuführungskanäle 35 und 35' mit der Beschichtungsnut 37 verbunden sind. Die innere Öffnung 2 hat hierbei ausgehend von der zentral liegenden Beschichtungsnut 37 eine in beide axiale Richtungen trichterförmig sich erweiternde Form.

Hierbei gelangt der Elektrolyt über den Zulaufkanal 33 in die untere Ringleitung 32', fließt über die unteren Zuführungskanäle 35' in die vom zu beschichtenden Kolben verschlossene Beschichtungsnut 37, von hier über die oberen Zuführungskanäle 35 in die obere Ringleitung 32, und wird von hier über den Ablaufkanal 40 aus der Beschichtungsmaske 1 ausgeleitet. Zu erkennen sind in den Figuren 2 und 3 auch die Austritte 41 der Zuführungskanäle 35, 35' in die Beschichtungsnut 37.

In den Ringleitungen 32, 32' sind, wie in Fig. 2 und 3 gut erkennbar ist, Ringelektroden 42 und 43 mit schematisch angedeuteten elektrischen Anschlüssen 53 und 54 angeordnet. Die vorliegende Beschichtungsmaske 1 kann dazu verwendet werden, die Flanken der Kolbenringnut 39 des Kolbens 38 elektrolytisch beispielsweise mit Eisen zu beschichten. Hierzu werden die Ringelektroden 42 und 43 als Anoden geschaltet, d.h., über die Anschlüsse 53 und 54 an den Pluspol einer Gleichspannungsquelle angeschlossen, wird der Kolben 38 als Kathode geschaltet, d.h., an den Minuspol der Gleichspannungsquelle angeschlossen, und wird ein eisenhaltiger Elektrolyt, beispielsweise eine Eisenlösung auf Sulfatbasis, über den Zulaufkanal 33 in die Beschichtungsmaske 1 eingeleitet.

Die Beschichtungsmaske 1 kann aber auch dazu verwendet werden, die Flanken der Kolbenringnut 39 des Kolbens 38 anodisch zu oxidieren. Hierzu wird der Kolben 38 als Anode geschaltet, d.h., an den positiven Pol einer Gleichspannungsquelle angeschlossen, werden die Ringelektroden 42 und 43 als Kathoden geschaltet, d.h., über die Anschlüsse 53 und 54 an den negativen Pol einer Gleichspannungsquelle angeschlossen, und wird als Elektrolyt beispielsweise Schwefelsäure über den Zulaufkanal 33 der Beschichtungsmaske 1 zugeführt.

Soll die Kolbenringnut 39 eines Kolbens 38 beschichtet werden, wird zunächst die Beschichtungsmaske 1 über ihre Öffnungen 3 bis 9 auf die Domen 11 bis 18 der Dehnvorrichtung 19 gemäß Fig. 4 geschoben. Anschließend werde die Domen 11 bis 18 nach radial außen verschoben, sodass die Beschichtungsmaske 1 in Richtung der Pfeile 20 bis 23 gedehnt wird. Nun wird der Kolben 38 in die hierdurch erweiterte, innere Öffnung 2 eingeführt, wonach die Domen 11 bis 18 so weit nach radial innen bewegt werden, bis die Dichtlippen 44 und 45, von denen die Beschichtungsnut 37 begrenzt wird, gemäß Fig. 5 beidseitig der zu beschichtenden Kolbenringnut 39 an der Mantelfläche des Körpers, hier an der Ringpartie 48 des Kolbens 38, zur Anlage gelangen und damit die Beschichtungsnut 37 und die zu beschichtende Kolbenringnut 39 des Kolbens 38 hermetisch verschließen.

Anschließend wird, falls die Flanken der Kolbenringnut 39 mit Eisen beschichtet werden sollen, ein eisenhaltiger Elektrolyt über den Zulaufkanal 33 in die Beschichtungsmaske 1 eingeleitet, werden die Ringelektroden 42 und 43 über die elektrischen Anschlüsse 53 und 54 an den Pluspol einer Gleichspannungsquelle angeschlossen, wird der Kolben 38 über einen elektrischen Anschluss 55 an den Minuspol der Gleichspannungsquelle angeschlossen und wird der überschüssige Elektrolyt über den Ablaufkanal 40 aus der Beschichtungsmaske 1 abgeleitet.

Nach einer gewissen Zeit sind die Flanken der Kolbenringnut 39 des Kolbens 38 in ausreichendem Maße beschichtet, sodass, nachdem der Elektrolyt komplett aus der Ringleitungen 32 und 32' ausgeleitet wurde, die Ringleitungen 32 und 32' und die Beschichtungsnut 37 mit 130 °C heißen Heißdampf gespült werden. Anschließend werden die Domen 11 bis 18 der Dehnvorrichtung 19 nach radial außen bewegt, sodass auch der Durchmesser der inneren Öffnung 2 vergrößert wird und der Kolben 38 aus der Beschichtungsmaske 1 entnommen werden kann.

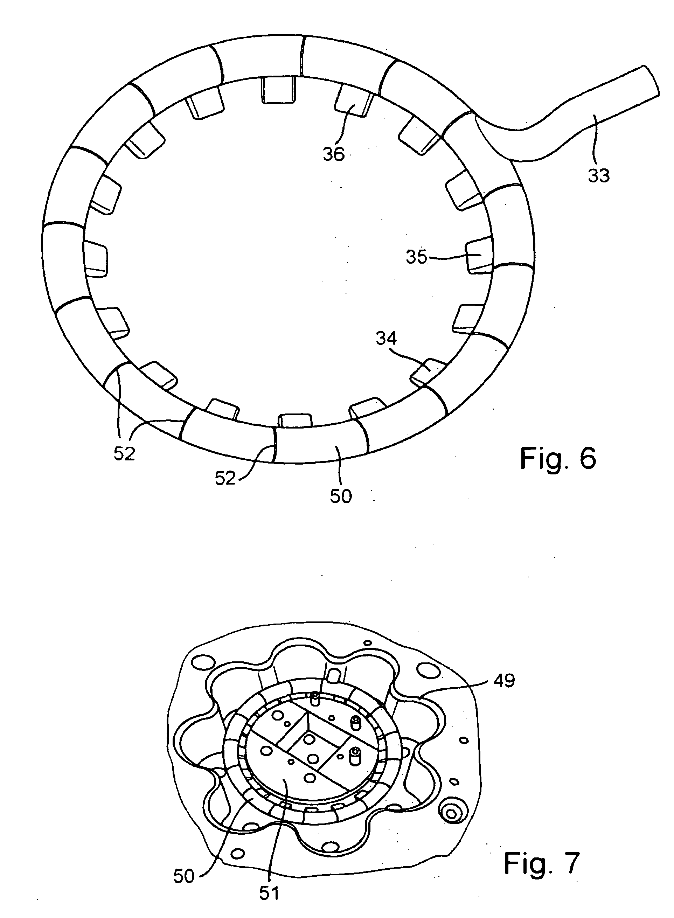

Hergestellt wird die Beschichtungsmaske 1 im Gießverfahren, wobei zunächst in eine Gießform 49, wie sie in Fig. 7 dargestellt ist, zwei Ringleitungsschablonen 50 eingelegt werden, die aus Sinterkunststoff bestehen, und von denen eine in Fig. 6 dargestellt ist. Die Ringleitungsschablone 50 gemäß Fig. 6 lässt den Zulaufkanal 33 und Zuführungskanäle 34, 35, 36, ... erkennen. In der Gießform 49 gemäß Fig. 7 stehen die Zuführungskanäle 34 bis 36 in Verbindung mit einem Gießkem 51, der durch seine spezielle Form gewährleistet, dass beim Gießvorgang die innere Öffnung 2 und die Beschichtungsnut 37 vollständig ausgebildet werden.

Die Ringleitungsschablonen 50 verbleiben nach dem Gießvorgang in der Beschichtungsmaske 1 und weisen Sollbruchstellen 52 auf, die beim ersten Beschichtungsvorgang, wenn die Beschichtungsmaske 1 und damit auch die Ringleitungsschablone 50 das erste Mal nach radial außen gedehnt werden, aufbrechen, sodass hierdurch die Elastizität der Beschichtungsmaske 1 nicht behindert wird. Vorteilhaft ist, bei der Herstellung der Ringleitungsschablonen 50 jeweils eine Ringelektrode in die Ringleitungsschablonen 50 mit einzubauen.

### Bezugszeichenliste

- 1: Beschichtungsmaske
- 2: innere Öffnung
- 3 bis 10: Öffnung
- 11 bis 18: Dom
- 19: Dehnvorrichtung
- 20 bis 23: Pfeil
- 24 bis 31: Bereich
- 32, 32': Ringleitung
- 33: Zulaufkanal
- 34 bis 36: Zuführungskanal
- 37: Beschichtungsnut
- 38: Kolben, zylinderförmiger Körper, Körper
- 39: Kolbenringnut des Kolbens 38, umlaufender Bereich
- 40: Ablaufkanal
- 41: Austritt
- 42, 43: Elektrode, Ringelektrode
- 44, 45: Dichtlippe
- 48: Ringpartie des Kolbens 38, Mantelfläche des Körpers
- 49: Gießform
- 50: Ringleitungsschablone
- 51: Gießkem
- 52: Sollbruchstelle
- 53,54,55: elektrischer Anschluss

## Patentansprüche

1. Beschichtungsmaske (1) zum elektrolytischen Beschichten eines umlaufenden Bereiches (39) auf der Mantelfläche (48) eines im Wesentlichen zylinderförmigen Körpers (38) aus Metall
- mit einer innere Öffnung (2), deren Durchmesser zumindest näherungsweise gleich dem Durchmesser des Körpers (38) ist,
- mit zwei in der inneren Öffnung (2) angeordneten, umlaufenden und eine Beschichtungsnut (37) beidseitig begrenzenden Dichtlippen (44, 45) aus elastisch nachgiebigem Material, die beidseitig des umlaufenden Bereiches (39) an den Körper (38) in Anlage bringbar sind und dann die auf dem umlaufenden Bereich (39) anliegende Beschichtungsnut (37) hermetisch abschließen, sodass ein Elektrolyt durch die Beschichtungsnut (37) hindurchleitbar ist, und
- mit mindestens einer, mit dem Elektrolyten in Kontakt befindlichen Elektrode (42, 43), die an den Pol einer Gleichspannungsquelle anschließbar ist,
**dadurch gekennzeichnet,**
**dass** die Beschichtungsmaske (1) aus einem elastisch nachgiebigen Material besteht und gleichmäßig über den Umfang verteilte, axial liegende Öffnungen (3 bis 10) aufweist, in die Domen (11 bis 18) einer Dehnvorrichtung (19) einführbar sind, die insoweit beweglich gelagert sind, dass von der Dehnvorrichtung (19) der radiale Durchmesser der Beschichtungsmaske (1) und damit der inneren Öffnung (2) insoweit vergrößerbar ist, dass der zylinderförmige Körper (38) in die innere Öffnung (2) einführbar ist, wobei der radiale Durchmesser der Beschichtungsmaske (1) so gewählt ist, dass nach einer Verkleinerung des radialen Durchmessers der Beschichtungsmaske (1) und damit der Inneren Öffnung (2) die elastisch vorgespannte Beschichtungsmaske (1) die Dichtlippen (44, 45) der Beschichtungsnut (37) beidseitig des umlaufenden Bereiches (39) auf den Körper (38) presst.

2. Beschichtungsmaske (1) nach Anspruch 1, **dadurch gekennzeichnet, dass** sie aus Kautschuk besteht.

3. Beschichtungsmaske (1) nach Anspruch 1, **dadurch gekennzeichnet, dass** sie aus Silikon besteht.

4. Beschichtungsmaske (1) nach einem der Ansprüche 1 bis 3, **dadurch gekennzeichnet, dass** sie zwischen den Öffnungen (3 bis 10) Bereiche (24 bis 31) mit gegenüber der Wandung in den Bereichen der Öffnungen (3 bis 10) dünnerer Wandung aufweist.

5. Beschichtungsmaske (1) nach einem der vorhergehenden Ansprüche, **dadurch gekennzeichnet, dass** sie zwischen der Beschichtungsnut (37) und den Öffnungen (3 bis 30) mindestens eine umlaufende Ringleitung (32) aufweist, die über Zuführungskanäle (34, 35, 36) mit der Beschichtungsnut (37) verbunden ist, und die mit einem Zulaufkanal (33) zum Zuführen des Elektrolyten und mit einem Ablaufkanal (40) zum Ausleiten des Elektrolyten verbunden ist.

6. Beschichtungsmaske (1) nach Anspruch 5, **dadurch gekennzeichnet, dass** die Elektrode (42, 43) als umlaufende Ringelektrode ausgebildet und im Innern der Ringleitung (32) angeordnet ist.

7. Verwendung der Beschichtungsmaske (1) nach einem der vorhergehenden Ansprüche zur Beschichtung einer Kolbenringnut (39) eines Kolbens (38) für einen Verbrennungsmotor.

## Claims

1. A coating mask (1) for electrolytically coating a peripheral region (39) on the jacket surface (48) of a substantially cylindrical body (38) made of metal
- comprising an inner opening (2), the diameter of which is at least approximately equal to the diameter of the body (38),
- comprising two sealing lips (44, 45) made of an elastically deformable material, which are disposed in the inner opening (2), are peripheral and delimit a coating groove (37) on both sides, and which can be brought into contact with the body (38) on both sides of the peripheral region (39) and then hermetically seal the coating groove (37) adjacent to the peripheral region (39), thereby permitting an electrolyte to be conducted through the coating groove (37), and
- comprising at least one electrode (42, 43), which is in contact with the electrolyte and can be connected to the pole of a DC voltage source,
**characterized in that**
the coating mask (1) is made of an elastically deformable material and comprises axially disposed openings (3 to 10) that are distributed in a uniform manner around the periphery, into which rods (11 to 18) of an expansion device (19) can be introduced, said rods being supported in a movable manner such that the expansion device (19) can increase the radial diameter of the coating mask (1) and, therefore, the inner opening (2) to the extent that the cylindrical body (38) can be introduced into the inner opening (2), wherein the radial diameter of the coating mask (1) is selected such that, after a reduction of the radial diameter of the coating mask (1) and, therefore, the inner opening (2), the elastically preloaded coating mask (1) presses the sealing lips (44, 45) of the coating groove (37) against the body (38) on both sides of the peripheral region (39).

2. The coating mask (1) according to claim 1, **characterized in that** it is made of rubber.

3. The coating mask (1) according to claim 1, **characterized in that** it is made of silicone.

4. The coating mask (1) according to any one of the claims 1 to 3, **characterized in that** it comprises regions (24 to 31) between the openings (3 to 10) that have thinner walls than the walls in the regions of the openings (3 to 10).

5. The coating mask (1) according to any one of the preceding claims, **characterized in that** it comprises at least one peripheral annular duct (32) between the coating groove (37) and the openings (3 to 30), which is connected to the coating groove (37) by way of supply channels (34, 35, 36), and which is connected to a supply channel (33) for the inflow of the electrolyte and to a discharge channel (40) for the outflow the electrolyte.

6. The coating mask (1) according to claim 5, **characterized in that** the electrode (42, 43) is in the form of a peripheral ring electrode and is disposed in the interior of the annular duct (32).

7. The use of the coating mask (1) according to any one of the preceding claims for coating a piston ring groove (39) of a piston (38) for an internal combustion engine.

## Revendications

1. Masque de revêtement (1) pour le revêtement électrolytique d'une région périphérique (39) sur une enveloppe extérieure (48) d'un corps (38) en métal essentiellement cylindrique,
- avec une ouverture interne (2), dont le diamètre est au moins sensiblement égal au diamètre du corps (38),
- avec deux lèvres d'étanchéité (44, 45) périphériques disposées dans l'ouverture interne (2), délimitant une rainure de revêtement (37) des deux côtés et constituées d'un matériau élastique souple, qui peuvent être appliquées sur le corps (38), des deux côtés de la région périphérique (39), puis ferment hermétiquement la rainure de revêtement (37) appliquée sur la région périphérique (39), de sorte qu'un électrolyte peut être guidé à travers la rainure de revêtement (37), et
- avec au moins une électrode (42, 43) en contact avec l'électrolyte, qui peut être connectée au pôle d'une source de tension constante,
**caractérisé en ce que**
- le masque de revêtement (1) est constitué d'une matière élastiquement souple et comporte des ouvertures (3 à 10) disposées axialement et réparties de façon régulière sur le pourtour, dans lesquelles peuvent être introduites des épines (11 à 18) d'un dispositif d'étirement (19), qui sont montées de façon mobile dans la mesure où le diamètre radial du masque de revêtement (1) et donc celui de l'ouverture interne (2) peuvent être agrandis par le dispositif d'étirement, de manière à ce que le corps cylindrique (38) puisse être introduit dans l'ouverture interne (2), le diamètre radial du masque de revêtement (1) étant choisi de manière à ce qu'après la diminution du diamètre radial du masque de revêtement (1) et sont de l'ouverture interne (2), le masque de revêtement (1) élastiquement précontraint pousse les lèvres d'étanchéité (44, 45) de la rainure de revêtement (37) sur le corps (38), des deux côtés de la région périphérique (39).

2. Masque de revêtement (1) selon la revendication 1, **caractérisé en ce qu'**il est constitué de caoutchouc.

3. Masque de revêtement (1) selon la revendication 1, **caractérisé en ce qu'**il est constitué de silicone.

4. Masque de revêtement (1) selon l'une des revendications 1 à 3, **caractérisé en ce qu'**entre les ouvertures (3 à 10), il comporte des régions (24 à 31) avec une paroi plus fine que la paroi dans les régions des ouvertures (3 à 10).

5. Masque de revêtement (1) selon l'une des revendications précédentes, **caractérisé en ce qu'**entre la rainure de revêtement (37) et les ouvertures (3 à 30), il comporte au moins une conduite annulaire périphérique (32), qui est reliée à la rainure de revêtement (37) par des canaux d'alimentation (34, 35, 36), tout en étant reliée à un canal d'alimentation (33) pour l'alimentation de l'électrolyte, ainsi qu'à un canal d'évacuation (40) pour la sortie de l'électrolyte.

6. Masque de revêtement (1) selon la revendication 5, **caractérisé en ce que** l'électrode (42, 43) est conçue comme une électrode annulaire périphérique, et disposée à l'intérieur de la conduite annulaire (32).

7. Utilisation du masque de revêtement (1) selon l'une des revendications précédentes, pour le revêtement d'une rainure annulaire de piston (39) d'un piston (38) pour un moteur à combustion.
